# NEUE EUROPÄISCHE PATENTSCHRIFT

(11) **EP 3 020 998 B2**
(45) Veröffentlichungstag und Bekanntmachung des Hinweises auf die Entscheidung über den Einspruch: **25.12.2024**
(45) Hinweis auf die Patenterteilung: 19.04.2017
(21) Anmeldenummer: 15003114.4
(22) Anmeldetag: 20.01.2011
(51) Int. Cl.: F16D 65/14, F16D 65/00, F16D 65/18, F16D 125/28, F16D 121/14

(54) **SCHEIBENBREMSE**
DISC BRAKE
FREIN A DISQUE

(30) Priorität: 27.01.2010 DE 102010005909
(43) Veröffentlichungstag der Anmeldung: 18.05.2016
(62) Teilanmeldung aus: 11702140.2
(73) Patentinhaber: Wabco Radbremsen GmbH, 68229 Mannheim (DE)
(72) Erfinder: Möller, Denny, 99338 Gossel (DE)
(74) Vertreter: Leinweber & Zimmermann

(56) Entgegenhaltungen:
- EP-A2- 1 610 024
- WO-A2-02/14125
- DE-A1- 102004 002 571
- DE-A1- 102007 001 960
- DE-A1- 4 231 560
- DE-A1- 4 416 175
- DE-A1- 4 416 175
- DE-C1- 10 219 148
- DE-C1- 10 219 148
- DE-C1- 19 515 063
- US-A1- 2005 045 434

## Beschreibung

Die Erfindung betrifft eine Scheibenbremse nach dem Oberbegriff von Anspruch 1.

Scheibenbremsen der oben genannten Art sind bekannt, beispielsweise aus der DE10219148 C1 oder der DE 44 16 175 A1. Vergleichbare Bremsen sind bekannt aus der EP 1 944 522 A1, der US 5 772 366 A und der DE 36 10 569 A1. Zahlreiche Bremsenhersteller und -vertreiber bieten Bremsen an, die für unterschiedliche Einsatzgebiete bzw. Fahrzeugtypen gedacht sind. Während die Sättel dieser Bremsen häufig gleich sind, unterscheiden sich die Bremsen in den jeweiligen Bremswellen im Inneren des Sattels. So können sich beispielsweise Bremswellen dadurch voneinander unterscheiden, daß sie in unterschiedlichen Übersetzungsverhältnissen bei der Betätigung der Bremse resultieren. Diese unterschiedlichen Übersetzungsverhältnisse, aber auch andere Unterschiede, entscheiden darüber, ob die Bremse für ein bestimmtes Einsatzgebiet bzw. für einen bestimmten Fahrzeugtyp geeignet ist. Da mehrere Bremswellen von ihrer Auslegung her dazu geeignet sind, mit dem betreffenden Sattel zusammenzuwirken, d.h. theoretisch zum Zuspannen der Bremse dienen können, fällt es beim Zusammenbau der Bremse nicht auf, wenn angesichts des beabsichtigten Einsatzgebietes eine falsche Bremswelle eingebaut wird.

Der Erfindung liegt daher die Aufgabe zugrunde, einen solchen Falscheinbau zuverlässig zu verhindern.

Erfindungsgemäß wird die gestellte Aufgabe durch eine Scheibenbremse nach Anspruch 1 gelöst.

Mit anderen Worten wird über die Einbauöffnung eine Art Codierung geschaffen, die den Einbau nur der für das beabsichtigte Einsatzgebiet sachgemäßen Bremswelle erlaubt, wohingegen eine andere Bremswelle wegen der als Codierung dienenden Einbauöffnung nicht in den Sattel eingebaut werden kann, wenngleich sie derart auf den Bremssattel abgestimmt sein mag, daß sie zumindest theoretisch zum Zuspannen der Bremse dienen könnte. Auf diese Weise wird beispielsweise verhindert, daß eine Bremswelle mit dem falschen Übersetzungsverhältnis in einen Bremssattel eingebaut wird. Anders ausgedrückt wird eine Codierung verwendet, um den Fehleinbau einer nicht sachgemäßen Bremswelle in den Sattel zu verhindern. Dies geschieht dadurch, daß die Codierung dafür sorgt, daß eben nur die zu dem beabsichtigten Einsatzgebiet passende Bremswelle eingebaut werden kann und wird.

Dabei fallen erfindungsgemäß eine Begrenzung der Einbauöffnung und eine Einrichtung zur Abstützung/Führung des Druckstücks zumindest abschnittweise zusammen. Es liegt also eine Doppelfunktion vor. Anders ausgedrückt wird ein Element zum Realisieren der oben erwähnten Codierung gleichzeitig zum Abstützen/Führen des Druckstücks verwendet. Dadurch kann die Teilezahl verringert werden. Erfindungsgemäß ist vorgesehen, daß die Einbauöffnung eine erste Abmessung in einer ersten Richtung und eine zweite Abmessung in einer quer zu der ersten Richtung liegenden zweiten Richtung hat und die Bremswelle in der ersten Richtung eine erste Abmessung hat, die kleiner als die erste Abmessung der Einbauöffnung ist, und/oder in der zweiten Richtung eine zweite Abmessung hat, die kleiner als die zweite Abmessung der Einbauöffnung ist.

Wenn oben und im Folgenden von "Abmessung" die Rede ist, so ist damit jeweils eine Abmessung gemeint, die für die Frage relevant ist, ob die Bremswelle durch die Einbauöffnung paßt.

Bei dieser Ausgestaltung wird eine für das beabsichtigte Einsatzgebiet ungeeignete Bremswelle bei dem Versuch des Einbaus in den Bremssattel an mindestens einer Stelle anschlagen, weshalb sie nicht durch die Eingangsöffnung paßt. Ein Fehleinbau ist damit vermieden.

Mit anderen Worten wird bei dieser erfindungsgemäß bevorzugten Ausgestaltung die Codierung durch die Abmessungen der Einbauöffnung einerseits und der Bremswelle andererseits realisiert.

Bevorzugt steht die erste Richtung senkrecht auf der zweiten Richtung.

Bei der Bremswelle kann es sich um eine Exzenterwelle handeln, die sich an einer Wand des Bremssattels abstützt und bei Verdrehen einen Bremsbacken gegen eine Bremsscheibe drückt. Bevorzugt liegt die genannte Wand dabei im bremsscheibenabgewandten und damit hinteren Bereich des Sattels und ist einstückig mit dem Sattel, d.h. nicht in Form eines Deckels oder dergleichen ausgebildet, was mechanische, insbesondere Festigkeitsvorteile hat.

Erfindungsgemäß weiter bevorzugt ist die Bremswelle Teil eines Drehhebels und/oder liegt eine Drehachse der Bremswelle parallel zu einer Hauptebene einer Bremsscheibe.

Diese Ausgestaltung ist besonders zuverlässig und robust. Dies gilt insbesondere dann, wenn entsprechend einer bevorzugten Ausführungsform der Erfindung ein zusammen mit der Bremswelle den Drehhebel ausmachender (Betätigungs-)Hebel in eingebautem Zustand innerhalb des Bremssattels liegt.

Der Zusammenbau einer Bremse muß besonders sorgfältig erfolgen, weil eine Bremse ein sicherheitsrelevantes Bauteil darstellt. Daher ist es vorteilhaft, einzelne Bauteile und ihre Lage nach Einbau in den Bremssattel zu inspizieren. Um dies insbesondere im Hinblick auf die Bremswelle zu ermöglichen, ist es erfindungsgemäß vorgesehen, daß eine die Bremswelle in Kombination mit einem Druckstück, mit einer Druckspindeleinrichtung und/oder mit einer Lagereinrichtung aufweisende vormontierte Einheit nicht durch die Einführöffnung paßt.

Beispielsweise das Druckstück könnte nämlich eine Inspizierung der Lage der Bremswelle innerhalb des Sattels nach Einbau erschweren oder gar unmöglich machen, sofern es als vormontierte Einheit zusammen mit der Bremswelle eingebaut würde.

Die Ausgestaltung, wonach die Bremswelle beispielsweise nicht zusammen mit dem Druckstück als vormontierte Einheit eingebaut werden kann, gewährleistet demgegenüber die Inspizierbarkeit der Bremswelle nach ihrem Einbau in den Sattel, und zwar bevor das Druckstück eingebaut wird.

Insbesondere einem vergleichbaren Zweck dient die Tatsache, dass erfindungsgemäß die Bremswelle nur in einer vorbestimmten Drehstellung durch die Einführöffnung passt, nach Passieren der Einführöffnung im Inneren des Bremssattels jedoch für die Zwecke des Zuspannens der Bremse verdrehbar ist. Mit der vorbestimmten Drehstellung ist dabei kein punktueller Wert gemeint, sondern ein unter Umständen recht kleiner Drehwinkelbereich.

Durch diese Ausgestaltung kann nämlich vermittels der erzwungenen Drehstellung beim Einführen in die Einführöffnung verhindert werden, daß die Bremswelle zusammen mit dem Druckstück und/oder einer Lagereinrichtung als vormontierte Einheit eingesetzt wird. Gleichzeitig ist aber die für die Funktion der Bremse erforderliche Flexibilität bzw. Verdrehbarkeit der Bremswelle gewährleistet.

Die oben erwähnte Codierung kann erfindungsgemäß durch einstückige, die Kontur der Einbauöffnung bestimmende Bereiche des Bremssattels realisiert sein. Es kann aber auch eine die Kontur der Einbauöffnung zumindest teilweise bestimmende Codiermaske vorgesehen sein, die zum Codieren eines Sattels an dem Sattel angebracht wird, und zwar abnehmbar oder nicht abnehmbar. Dadurch kann der Sattel universeller ausgestaltet sein, wohingegen er seine Individualität erst durch Anbringen der Maske erhält.

Die Einbauöffnung ist erfindungsgemäß bevorzugt in montiertem Zustand der Bremsscheibe zugewandt. Dadurch kann der Sattel in seinem bremsscheibenabgewandten (hinteren) Abschnitt geschlossen ausgeführt sein, was mechanische, insbesondere Festigkeitsvorteile hat. Diese Lösung ist auch einer Lösung vorzuziehen, bei der die Einbauöffnung nicht im bremsscheibenzugewandten (vorderen) Teil des Bremssattels, sondern seitlich, oben oder unten ausgebildet ist, weil auch eine solche Öffnung den Sattel mechanisch schwächen würde. Demgegenüber ist die bremsscheibenzugewandte Öffnung ohnehin erforderlich, weil durch diese Öffnung die Zuspanneinrichtung auf den zuspannseitigen Bremsbacken und damit auf die Bremsscheibe einwirkt.

Der Bremssattel ist erfindungsgemäß bevorzugt einstückig. In seinem Inneren ist die Zuspanneinrichtung gelagert. Er ist insbesondere im rückwärtigen Bereich bis auf die erforderlichen Funktionsöffnungen weitestgehend geschlossen, wobei lediglich zur Bremsscheibe weisend eine Öffnung vorhanden ist, durch die die Funktionsteile in den Innenraum einführbar sind, um dort dann in der Gesamtheit die Zuspanneinrichtung zu bilden.

Dabei wird erfindungsgemäß bevorzugt eine Drehhebelbetätigung mit einer exzentrischen Wirkung eingesetzt, um im Kraftflußbereich eine Eingangskraft durch die innere Übersetzung über angekoppelte Druckübertragungsmittel, wie beispielsweise ein traversenförmiges Druckstück und/oder Druckspindeleinrichtungen, in eine wesentlich höhere Ausgangskraft in Richtung des Bremsbelages bzw. der Bremsscheibe als Bremskraft umzusetzen. Dafür ragt aus der exzentrisch wirkenden Bremswelle der Hebel vor, an dessen Ende eine Betätigungseinrichtung wie beispielsweise ein Betätigungszylinder angreift, um den Drehhebel mit der Bremswelle um eine parallel zu einer Bremsscheibenebene liegende Drehachse zu verschwenken.

Damit während des erforderlichen Bremshubes ein reibungsmindernder Kontakt im Kraftfluß vorhanden ist und um die Einbauräume im Sattelinneren zu optimieren, sind bevorzugt Teildrehlagerungen bzw. Abstützstellen unterschiedlicher Ausführung vorhanden, um die Funktionsteile miteinander zu koppeln. Dafür umschlingen sich die Funktionsteile in Teilabschnitten, beispielsweise zusätzlich noch über entsprechend ausgeführte Zwischenlager, wie beispielsweise Dreh- und/oder Gleitlagerungen.

Häufig werden Scheibenbremsen mit einer bestimmten Sattelgröße im Fahrzeugeinsatz in unterschiedliche Fahrzeugtypen verbaut. Da je Fahrzeugtyp auch unterschiedliche Bremsenleistungen erforderlich sind, müssen die Innenteile auch dementsprechend ausgelegt werden. Dies erfordert Änderungen an der Teiledimensionierung, wie insbesondere die innere Bremsenübersetzung über Drehhebel/Bremswelle. Der Drehhebel mit seiner Bremswellenkontur wird dementsprechend ausgelegt, d.h. die geometrische Kontur ist je Einsatzfall der Bremse zugeordnet.

Die Erfindung schafft eine Möglichkeit, einen Fehleinbau insbesondere des Drehhebels in den Sattelinnenraum durch die Einbauöffnung zu verhindern. Mit anderen Worten stellt sie sicher, daß der richtige Drehhebel dem entsprechenden Bremssattel sicher zugeordnet ist und daß auch die richtige Einbau- bzw. Funktionslage des Drehhebels im Bremssattel gewährleistet ist.

Dazu sieht die Erfindung insbesondere vor, daß zwischen der Öffnungsgeometrie / -kontur besagter Einbauöffnung und der Drehhebel-/Bremswellenkontur eine Codierung/Verschlüsselung vorhanden ist, wobei die Codierung durch verschiedene Kombinationen der Geometrie der Anlageflächen des Bremssattels einerseits und der Anlageflächen des Drehhebels andererseits erreicht wird. Besagte Anlageflächen in Form von Vorsprüngen sind so vorhanden und auch so aufeinander abgestimmt, daß es nur möglich ist, den jeweils richtigen Drehhebel in einer definierten Position bzw. Raumlage in das dazu passende Bremssattelgehäuse einzubauen. Bevorzugt wirkt diese Codierung nur während des Montagevorgangs, was bedeutet, daß nach Erreichen der vordefinierten Einbauposition der Drehhebel ohne weitere Maßnahmen funktionsfähig ist.

Wenngleich nach einer bevorzugten Ausführungsform der Erfindung spezielle Codierungsbereiche zwischen der Drehhebel-/Bremswellengeometrie als Vorsprünge ausgeführt sind, können diese auch an anderen Positionen zueinander/untereinander liegen, wenn damit wirkungsvoll verhindert wird, daß ein falscher Drehhebel in einen Bremssattel eingebaut wird. Dabei ist es gleichgültig, wie der Drehhebel in seiner Gesamtheit und als exzentrisch wirkende Nockenwelle ausgeführt und gegenüber dem Sattelende abgestützt/gelagert wird.

Letztendlich kann die Einbaucodierung durch einzelne oder mehrere Maßnahmen realisiert werden, wie:
- Zusätzliches Bauteil zur Verbreiterung der Bremswelle, als Vorsprung wirkend,
- Variationen der Positionen der seitlichen Vorsprünge bzw. Führungsleisten im Bremssattelgehäuse und/oder
- Vorsprünge des Sattels, die in Vertiefungen der Bremswelle oder umgekehrt nach einem Nut/Federprinzip eingreifen.

Wie bereits oben erläutert sieht die Erfindung insbesondere einen einteiligen Bremssattel vor. Sie ist aber auch auf zwei- oder mehrteilige Bremssättel anwendbar, sofern die Einbauöffnung bremsscheibenzugewandt liegt.

Oben ist bereits erläutert worden, daß es nach der Erfindung insbesondere vorgesehen ist, daß die Bremswelle bzw. der Drehhebel in Kombination mit einem Druckstück und/oder mit einer Lagereinrichtung zusammen, also als vormontierte Einheit, nicht durch die Einführöffnung paßt. Mit anderen Worten ist die Einführöffnung vergleichsweise klein. Dadurch ist eine eventuelle Materialschwächung gegenüber einer größeren Einbauöffnung verringert. Materialaufträge/Aufdickungen sind daher in nur geringem Maße oder gar nicht erforderlich. Solche Materialaufträge/Aufdickungen sind nämlich in diesem Bereich wegen des Platzmangelns im Hinblick auf andere Fahrzeugteile, wie beispielsweise Radfelgen, nur begrenzt oder gar nicht möglich. Bei zu großer Einbauöffnung können daher Materialdeformationen nicht ausgeschlossen werden, so daß dann damit einhergehende Relativbewegungen im Flanschbereich zwischen Bremssattel und Verschlußplatte zu Undichtigkeiten führen können. Dies wird mit der erfindungsgemäß bevorzugt kleineren Einbauöffnung vermieden.

Das Merkmal der "kleinen" Einbauöffnung erfüllt zusätzlich noch eine weitere Aufgabenstellung, nämlich eine Sattelstabilisierung über Formsteifigkeit zur Verbesserung der Funktionssicherheit.

Die Erfindung ist gleichermaßen auf Einspindelbremsen und Zwei- oder Mehrspindelbremsen anwendbar.

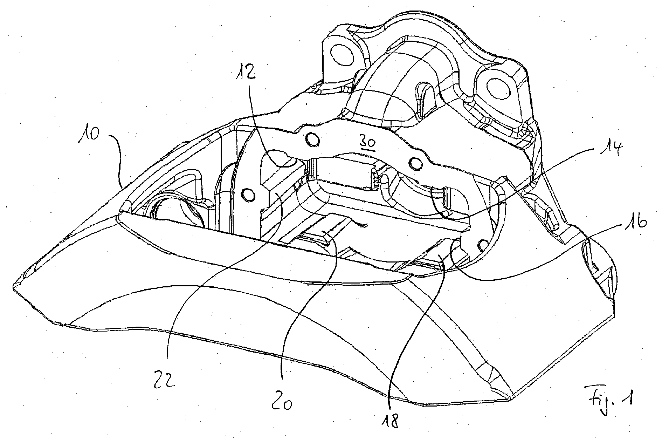

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine perspektivische Ansicht eines Bremssattels nach einer bevorzugten Ausführungsform der Erfindung,

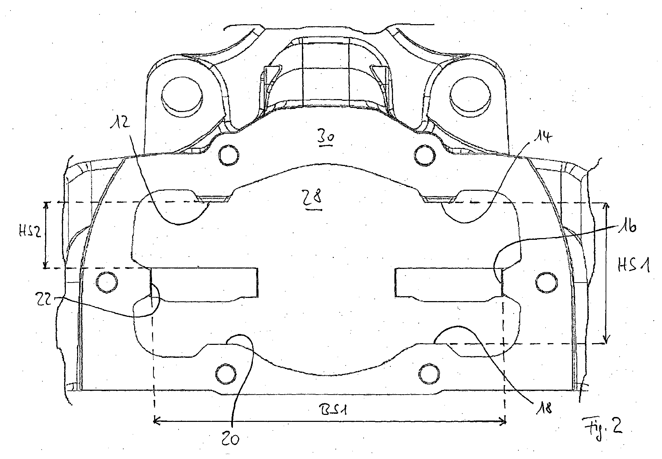

- Figur 2: eine teilweise geschnittene Ansicht des Sattels,
- Figur 3: eine teilweise geschnittene Seitenansicht des Sattels mit einem Drehhebel in Explosions-Darstellung,
- Figur 4: die gleiche Ansicht wie Figur 2, jedoch mit Drehhebel,
- Figur 5: die gleiche Ansicht wie Figur 4, jedoch in einem anderen Betriebszustand,

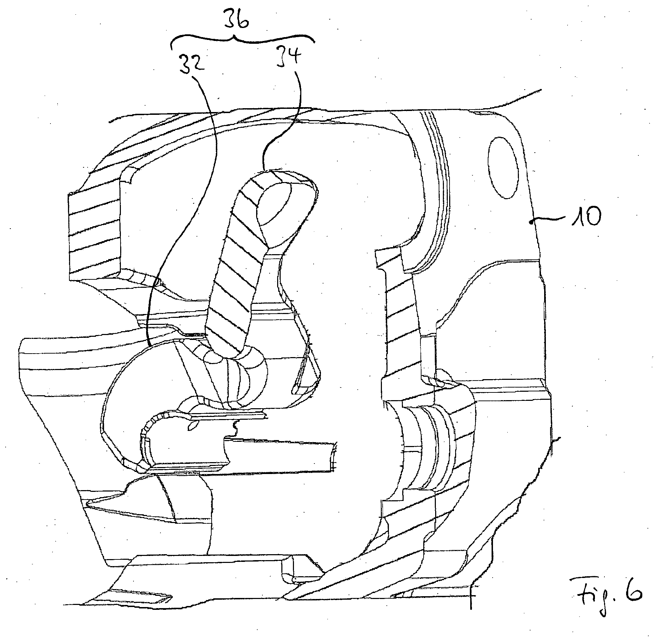

- Figur 6: eine teilweise geschnittene Ansicht des Sattels mit eingebautem Drehhebel,
- Figur 7: eine teilweise geschnittene Draufsicht auf den Sattel mit eingebautem Drehhebel,
- Figur 8: die gleiche Ansicht wie Figur 4, jedoch mit eingebautem Druckstück,
- Figur 9: die gleiche Ansicht wie Figur 7, jedoch mit eingebautem Druckstück und
- Figur 10: eine Seitenschnittansicht des Sattels mit eingebauter Zuspanneinrichtung.

Zu der in der Zeichnung dargestellten Bremse gehört ein Bremssattel 10 mit Führungsleisten 12, 14, 16, 18, 20, 22. Die Führungsleisten dienen zum Führen eines Druckstücks 24. Das Druckstück ist bei diesem Ausführungsbeispiel traversenförmig. Eine Druckspindeleinrichtung ist mit der Bezugszahl 26 bezeichnet.

Der Bremssattel 10 hat eine der (nicht gezeigten) Bremsscheibe zugewandte Einbauöffnung 28. Die Kontur der Einbauöffnung wird unter anderem von den Führungsleisten 12 bis 22 bestimmt. Daher sind es auch die Führungsleisten, die mitbestimmen, was durch die Einführöffnung 28 hindurchpaßt. Eine Abmessung zwischen den Führungsleisten 14 und 18 ist mit HS1 bezeichnet. Eine Abmessung zwischen der Führungsleiste 12 und einer Kante der Führungsleiste 22 ist mit HS2 bezeichnet. Eine Abmessung zwischen den Führungsleisten 16 und 22 ist mit BS1 bezeichnet. Ein die Einführöffnung 28 umlaufender Flansch trägt die Bezugszahl 30.

Zu der Bremse gehört ferner eine Bremswelle 32, die zusammen mit einem Betätigungshebel 34 einen Drehhebel 36 bildet. An der Bremswelle 32 sind an den beiden Stirnseiten Vorsprünge 38, 40 ausgebildet. Eine Abmessung zwischen einer Seite des Vorsprungs 40 und einer Begrenzungsfläche der Bremswelle 32 ist mit HW1 bezeichnet. Die Abmessung zwischen den jeweiligen freien Enden der Vorsprünge 38 und 40 ist mit BW1 bezeichnet. Die Abmessung zwischen den beiden Stirnseiten der Bremswelle 32 ist mit BW2 bezeichnet.

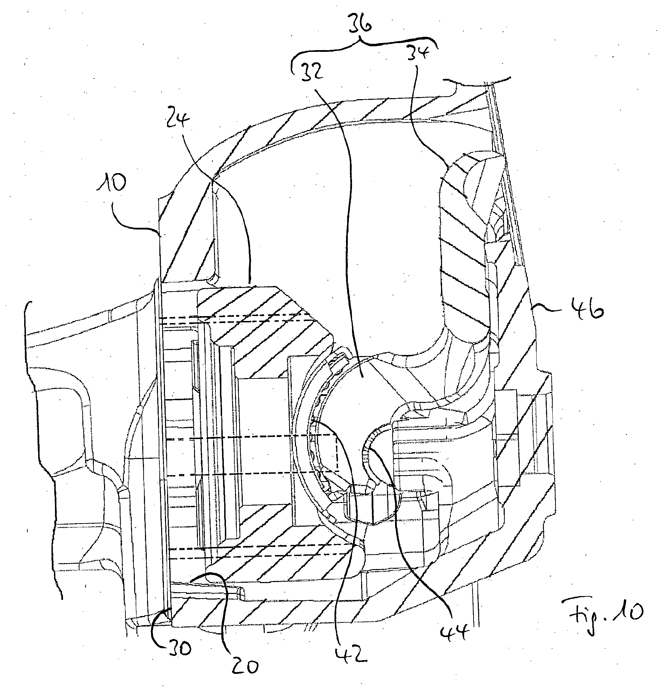

Wie insbesondere Figur 10 zu entnehmen ist, ist der Drehhebel 36 in eingebautem Zustand innerhalb des Sattels 10 angeordnet.

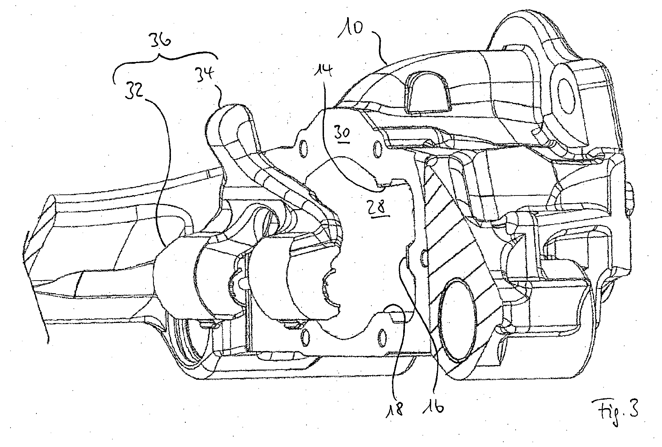

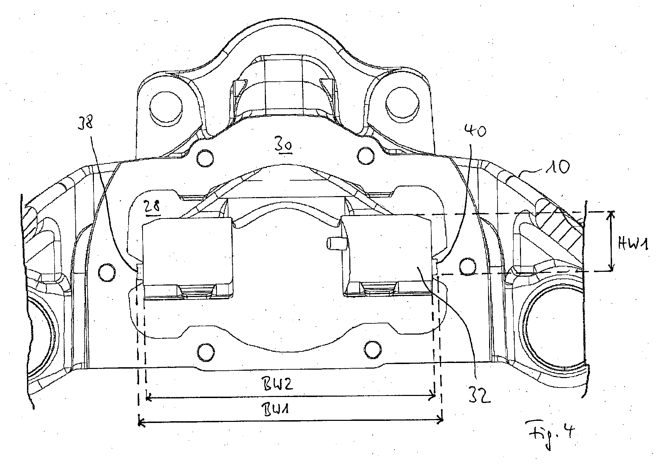

Figur 3 zeigt den Drehhebel 36 und den Sattel 10 vor dem Einbau. In der Stellung nach Figur 4 kann der Drehhebel 36 bzw. die Bremswelle 32 nicht durch die Einführöffnung 28 in den Sattel 10 eingebaut werden, weil die beiden Vorsprünge 38, 40 an den Führungsleisten 22 bzw. 16 anschlagen. Die Abmessung BW1 ist nämlich größer als die Abmessung BS1.

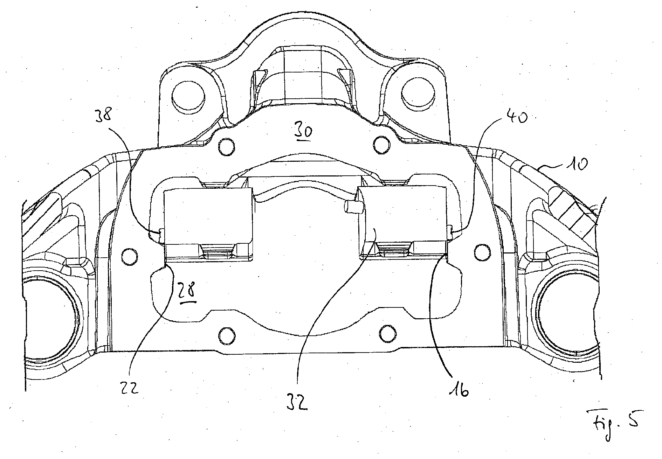

Erst wenn der Drehhebel 36 bzw. die Bremswelle 32 so verschwenkt wird, daß die Vorsprünge 38, 40 gemäß Figur 5 oberhalb der Führungsleisten 16, 22 zu liegen kommen, kann der Drehhebel in den Innenraum des Bremssattels 10 eingeschoben werden.

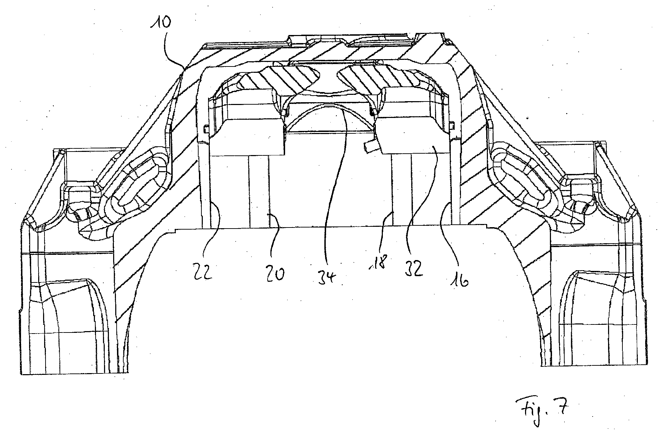

In dieser Drehwinkelstellung, wie sie in Figur 5 gezeigt ist, kann die Bremswelle 32 aber nicht in Kontakt mit dem Druckstück 24 sein bzw. mit dem Druckstück keine vormontierte Einheit bilden, weshalb die Bremswelle 32 bzw. der Drehhebel 36 nur ohne das Druckstück 24 in den Sattel 10 eingebaut werden kann. Diesen Zustand zeigt Figur 7. In dem Betriebszustand nach Figur 7 kann die Einbaulage der Bremswelle 32 bzw. des Drehhebels 36 ungehindert inspiziert werden, insbesondere weil kein Druckstück die Sicht versperrt.

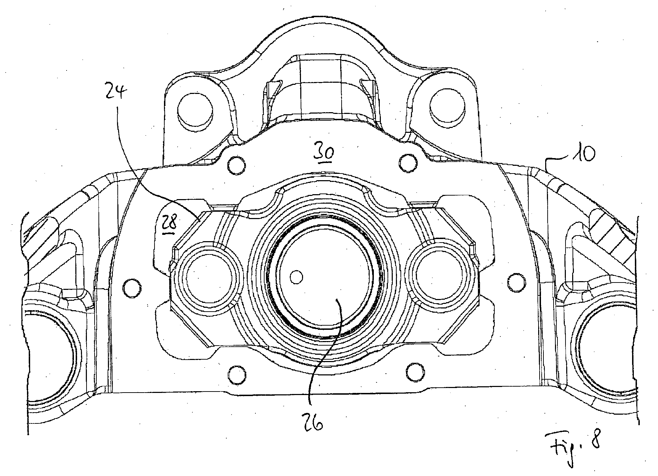

Anders bei dem Betriebszustand nach Figur 8. Hier ist das Druckstück 24 bereits montiert, weshalb die Bremswelle 32 nicht mehr zu sehen ist. Auch ist die Druckspindeleinrichtung 26 montiert.

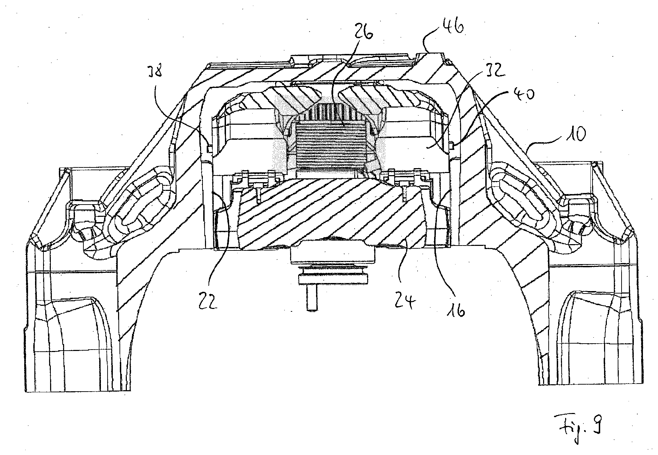

Figur 8 ist darüber hinaus insbesondere zu entnehmen, daß die der Codierung des Bremssattels 10 dienenden Führungsleisten 12 bis 22 gleichzeitig auch der Führung des Druckstücks 24 dienen. Wie aber Figur 9 zu entnehmen ist, ist die Länge der Führungsleisten 12 bis 22 derart bemessen, daß sie ein Verdrehen der Bremswelle 32 bzw. des Drehhebels 36 in eingebautem Zustand nicht beeinträchtigen. Mit anderen Worten kann die Bremswelle 32 auch angesichts der Vorsprünge 38, 40 in eingebautem Zustand verdreht werden, ohne daß die Vorsprünge an den Führungsleisten 12 bis 22 anschlagen würden.

Figur 10 zeigt nicht nur den Sattel 10 mit dem Drehhebel 36 und dem Druckstück 24 in eingebautem Zustand, sondern auch Gleit- und/oder Drehlagerungen 42, 44 zum Koppeln der Bremswelle 32 mit dem Druckstück 24 einerseits und der rückwärtigen Wand 46 des Sattels 10 andererseits.

Wie oben im einzelnen erläutert ist, sind der Sattel 10 einerseits und der Drehhebel 36 andererseits durch Ausgestaltung bestimmter Abmessungen derart "codiert", daß der Drehhebel 36 durch die Einführöffnung 28 in das Innere des Sattels 10 eingeführt werden kann. Demgegenüber ist wegen der Codierung der Einbau eines anderen Drehhebels, beispielsweise eines Drehhebels mit einem anderen Übersetzungsverhältnis ausgeschlossen, obwohl er (theoretisch) zum Zuspannen der Bremse dienen könnte. Dies wird beispielsweise durch eine andere Dimensionierung der oben beschriebenen Abmessungen erreicht, so beispielsweise durch eine andere Anbringung der Vorsprünge 38, 40. Dadurch ist gewährleistet, daß nur die für das beabsichtigte Einsatzgebiet vorgesehene Drehwelle durch die Einführöffnung 28 in den Sattel 10 eingebaut wird.

Nach erfolgtem Einbau aller Funktionsteile in den Bremssattel 10 wird die Einführöffnung 28 durch einen nicht gezeigten und wenigstens eine Funktionsöffnung zur Durchführung der wenigstens einen Druckspindeleinrichtung aufweisenden Verschlußdeckel so verschlossen und abgedichtet, daß keine funktionsbeeinträchtigenden Mittel in den Sattelinnenraum eindringen können.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einer Bremswelle (32) und
einem Druckstück (24) und/oder einer Druckspindeleinrichtung (26) und einem eine Einbauöffnung (28) zum Einbauen der Bremswelle aufweisenden Bremssattel (10),
wobei die Bremswelle derart auf den Bremssattel abgestimmt ist, daß sie zum Zuspannen der Bremse dienen kann,
**dadurch gekennzeichnet, daß**
der Bremssattel und die Bremswelle jeweils eine Codierung aufweisen, die einen Einbau der Bremswelle durch die Einbauöffnung nur dann erlaubt, wenn die beiden Codierungen zueinander passen,
die Einbauöffnung (28) eine erste Abmessung (BS1) in einer ersten Richtung und eine zweite Abmessung (HS2) in einer quer zu der ersten Richtung liegenden zweiten Richtung hat und die Bremswelle (32) in der ersten Richtung eine erste Abmessung (BW2) und in der zweiten Richtung eine zweite Abmessung (HW1) hat,
zu der Codierung gehört, daß die erste Abmessung (BW2) der Bremswelle kleiner als die erste Abmessung (BS1) der Einbauöffnung und die zweite Abmessung (HW1) der Bremswelle kleiner als die zweite Abmessung (HS2) der Einbauöffnung sind, und
eine Einrichtung zur Begrenzung der ersten und/oder der zweiten Abmessung der Einbauöffnung und eine Einrichtung (12, 14, 16, 18, 20, 22) zur Abstützung/Führung eines Druckstücks (24) zumindest teilweise zusammenfallen, so daß die Einrichtung zur Begrenzung der ersten und/oder der zweiten Abmessung der Einbauöffnung zum Abstützen/Führen des Druckstücks dient,
**dadurch gekennzeichnet, daß** eine die Bremswelle (32) in Kombination mit dem Druckstück (24) und/oder mit einer Druckspindeleinrichtung (26) aufweisende vormontierte Einheit nicht durch die Einführöffnung (28) paßt,
**dadurch gekennzeichnet, daß**
die Bremswelle (32) nur in einer vorbestimmten Drehstellung durch die Einführöffnung (28) paßt, nach Passieren der Einführöffnung im Inneren des Bremssattels (10) jedoch für die Zwecke des Zuspannens der Bremse verdrehbar ist.

2. Scheibenbremse nach Anspruch 1, **dadurch gekennzeichnet, daß** die erste Richtung senkrecht auf der zweiten Richtung steht.

3. Scheibenbremse nach einem der Ansprüche 1 oder 2, **dadurch gekennzeichnet, daß** die Bremswelle (32) eine Exzenterwelle ist, die sich an einer Wand (46) des Bremssattels (10) abstützt und bei Verdrehen einen Bremsbacken gegen eine Bremsscheibe drückt.

4. Scheibenbremse nach einem der vorangehenden Ansprüche, **dadurch gekennzeichnet, daß** die Bremswelle (32) Teil eines Drehhebels (36) ist und/oder eine Drehachse der Bremswelle parallel zu einer Hauptebene einer Bremsscheibe liegt.

5. Scheibenbremse nach einem der vorangehenden Ansprüche, **gekennzeichnet durch** eine die Kontur der Einbauöffnung (28) zumindest teilweise bestimmende Codiermaske.

6. Scheibenbremse nach einem der vorangehenden Ansprüche, **dadurch gekennzeichnet, daß** die Einbauöffnung (28) einer Bremsscheibe zugewandt ist.

## Claims

1. Disc brake, in particular for utility vehicles, having
a brake shaft (32) and
a thrust piece (24) and/or a thrust spindle device (26) and a brake calliper (10) which has an installation opening (28) for the installation of the brake shaft,
wherein the brake shaft is coordinated with the brake calliper such that said brake shaft can be used for the application of the brake,
**characterized in that**
the brake calliper and the brake shaft each have a coding which permits installation of the brake shaft through the installation opening only when the two codings match one another,
the installation opening (28) has a first dimension (BS1) in a first direction and a second dimension (HS2) in a second direction lying transversely with respect to the first direction, and the brake shaft (32) has a first dimension (BW2) in the first direction and a second dimension (HW1) in the second direction,
the coding includes the first dimension (BW2) of the brake shaft being smaller than the first dimension (BS1) of the installation opening and the second dimension (HW1) of the brake shaft being smaller than the second dimension (HS2) of the installation opening, and
a device for limiting the first and/or the second dimension of the installation opening and a device (12, 14, 16, 18, 20, 22) for supporting/guiding a thrust piece (24) at least partially coincide, so that the device for limiting the first and/or the second dimension of the installation opening is used for supporting/guiding the thrust piece,
**characterized in that** a preassembled unit which has the brake shaft (32) in combination with the thrust piece (24) and/or with a thrust spindle device (26) does not fit through the insertion opening (28),
**characterized in that**
the brake shaft (32) fits through the insertion opening (28) only when in a predetermined rotational position, but, after passing through the insertion opening, is rotatable in the interior of the brake calliper (10) for the purposes of the application of the brake.

2. Disc brake according to claim 1, **characterized in that** the first direction is perpendicular to the second direction.

3. Disc brake according to either of claims 1 or 2, **characterized in that** the brake shaft (32) is an eccentric shaft which is supported on a wall (46) of the brake calliper (10) and which, when rotated, presses a brake pad against a brake disc.

4. Disc brake according to one of the preceding claims,
**characterized in that** the brake shaft (32) is part of a rotary lever (36), and/or an axis of rotation of the brake shaft lies parallel to a main plane of a brake disc.

5. Disc brake according to one of the preceding claims, **characterized by** a coding mask which at least partially defines the contour of the installation opening (28).

6. Disc brake according to one of the preceding claims,
**characterized in that** the installation opening (28) faces toward a brake disc.

## Revendications

1. Frein à disque, en particulier pour véhicules utilitaires, comportant
un arbre de frein (32) et
une pièce de pression (24) et/ou un dispositif à broche de pression (26) et un étrier de frein (10) présentant une ouverture de montage (28) pour le montage de l'arbre de frein,
dans lequel l'arbre de frein est adapté à l'étrier de frein de telle sorte qu'il peut servir à actionner le frein,
**caractérisé en ce que**
l'étrier de frein et l'arbre de frein présentent respectivement un codage qui ne permet le montage de l'arbre de frein à travers l'ouverture de montage que si les deux codages sont compatibles entre eux,
l'ouverture de montage (28) a une première dimension (BS1) dans une première direction et une seconde dimension (HS2) dans une seconde direction transversale à la première direction, et l'arbre de frein (32) a une première dimension (BW2) dans la première direction et une seconde dimension (HW1) dans la seconde direction,
le codage comprend le fait que la première dimension (BW2) de l'arbre de frein est inférieure à la première dimension (BS1) de l'ouverture de montage et que la seconde dimension (HW1) de l'arbre de frein est inférieure à la seconde dimension (HS2) de l'ouverture de montage, et
un dispositif permettant de limiter la première et/ou la seconde dimension de l'ouverture de montage et un dispositif (12, 14, 16, 18, 20, 22) permettant de soutenir/guider une pièce de pression (24) se confondent au moins partiellement, de sorte que le dispositif permettant de limiter la première et/ou la seconde dimension de l'ouverture de montage sert à soutenir/guider la pièce de pression,
**caractérisé en ce qu'**une unité préassemblée présentant l'arbre de frein (32) en combinaison avec la pièce de pression (24) et/ou avec un dispositif à broche de pression (26) ne passe pas par l'ouverture d'insertion (28),
**caractérisé en ce que**
l'arbre de frein (32) ne passe par l'ouverture d'insertion (28) que dans une position de rotation prédéterminée, mais est susceptible de tourner à l'intérieur de l'étrier de frein (10) après avoir traversé l'ouverture d'insertion, dans le but d'actionner le frein.

2. Frein à disque selon la revendication 1, **caractérisé en ce que** la première direction est perpendiculaire à la seconde direction.

3. Frein à disque selon l'une des revendications 1 ou 2,
**caractérisé en ce que** l'arbre de frein (32) est un arbre excentrique qui s'appuie sur une paroi (46) de l'étrier de frein (10) et qui, lorsqu'il tourne, pousse une mâchoire de frein contre un disque de frein.

4. Frein à disque selon l'une des revendications précédentes,
**caractérisé en ce que** l'arbre de frein (32) fait partie d'un levier rotatif (36) et/ou **en ce qu'**un axe de rotation de l'arbre de frein est parallèle à un plan principal d'un disque de frein.

5. Frein à disque selon l'une des revendications précédentes,
**caractérisé par** un masque de codage déterminant au moins partiellement le contour de l'ouverture de montage (28).

6. Frein à disque selon l'une des revendications précédentes, **caractérisé en ce que** l'ouverture de montage (28) est tournée vers un disque de frein.
